# EUROPÄISCHE PATENTANMELDUNG

(11) **EP 0 525 554 A2**
(43) Veröffentlichungstag der Anmeldung: **03.02.1993**
(21) Anmeldenummer: 92112298.2
(22) Anmeldetag: 18.07.1992
(51) Int. Cl.: B23B 13/02

(54) **Werkstoffschieber für eine Vorrichtung zum Zuführen von Werkstoffstangen**

(30) Priorität: 27.07.1991 DE 4124986
(71) Anmelder: Kurt Breuning IRCO-Maschinenbau GmbH, D-71144 Steinenbronn (DE)
(72) Erfinder: Breuning, Roland, W-7049 Steinenbronn (DE)
(74) Vertreter: Witte, Alexander, Dr.-Ing.

(57) **Zusammenfassung**

Ein Werkstoffschieber (30) für eine Vorrichtung zum Zuführen von Werkstoffstangen (12) in eine Arbeitsspindel (14) einer Werkszeugmaschine ist über einen Antrieb axial hin- und herbewegbar. Es wird vorgeschlagen, den Werkstoffschieber (30) mit in radialer Richtung bewegbaren Klemmelementen (64, 66; 94, 96) zu versehen, die über eine Steuerung radial derart spreizbar sind, daß der Werkstoffschieber (30) in einer beliebigen Arbeitsposition relativ zur Innenfläche (72) der Arbeitsspindel (14) bzw. zur Innenfläche der Stangenführung unverrückbar mit dieser klemmbar ist.

## Beschreibung

Die Erfindung betrifft einen Werkstoffschieber für eine Vorrichtung zum Zuführen von in einer Stangenführung aufgenommenen Werkstoffstangen in eine Arbeitsspindel einer Werkzeugmaschine, wobei der Werkstoffschieber über einen Antrieb axial hin- und herbewegbar ist und an eine in axialer Vorschubrichtung vorderen Ende mit einem Kopf versehen ist, der an ein hinteres Ende einer zuzuführenden Werkstoffstange legbar ist, wobei der Werkstoffschieber mit in radialer Richtung bewegbaren Elementen versehen ist.

Ein derartiger Werkstoffschieber ist aus der US-PS-2 572 741 bekannt.

Der Werkstoffschieber weist einen Außendurchmesser auf, der geringer ist als der lichte Innendurchmesser der Stangenführung bzw. der Arbeitsspindel. Zur Führung des Werkstoffschiebers in der Stangenführung ist über diesen eine Ringmuffe geschoben, in deren mittiger Öffnung der Werkstoffschieber drehbar aufgenommen ist. Der Außendurchmesser der Muffe entspricht etwa dem lichten Innendurchmesser der Stangenführung. Zur lösbaren Verriegelung von Werkstoffschieber und Muffe sind radial bewegbare Elemente in Form von radial gerichteten Stiften vorgesehen, die in radial verlaufenden Bohrungen in der Muffe aufgenommen sind und die einerseits in einer Ringnut auf der Außenseite des Werkstoffschiebers abgestützt sind. Die Länge der Stifte ist dabei so gewählt, daß sie andererseits an dem der Ringnut gegenüberliegenden Ende bis zur Innenseite der Stangenführung reichen. Die Bewegung der Muffe in Vorschubrichtung wird durch einen Anschlag begrenzt, wobei in dieser Stellung der Muffe Aussparungen an der Innenseite der Stangenführung es ermöglichen, daß bei weiterem Vorschub des Werkstoffschiebers die Stifte radial nach außen gerichtet in diese Aussparungen eintreten und dabei aus der Ringnut an der Außenseite des Werkstoffschiebers austreten. Dadurch ist die Zwangsverriegelung zwischen Werkstoffschieber und Muffe gelöst, so daß der Werkstoffschieber stirnseitig aus der Stangenführung hinaus in eine Arbeitsspindel hineingeschoben werden kann. Bei der umgekehrten Bewegung, also beim Zurückziehen des Werkstoffschiebers, werden die Stifte durch entsprechende Schrägflächen der Aussparungen an der Innenseite der Stangenführung zwangsweise wieder in die Ringnut an der Außenseite des Werkstoffschiebers eingerückt und damit die Verriegelung zwischen Muffe und Werkstoffschieber wieder hergestellt.

Ein weiterer Werkstoffschieber ist aus der DE-OS 14 77 459 bekannt.

Derartige bekannte Vorrichtungen, die auch Stangenlademagazine genannt werden, dienen dazu, einen stangenförmigen Werkstoff einer Werkzeugmaschine, beispielsweise einer Drehmaschine zuzuführen.

Dabei wird der stangenförmige Werkstoff, sei es Rundmaterial oder profiliertes Material, aus einem Magazin in eine Führung eingebracht, und anschließend wird mittels eines Werkstoffschiebers die Stange längs der Führung verschoben, bis diese beispielsweise in eine Arbeitsspindel einer nachgeordneten Werkzeugmaschine eingeführt wird. In der Werkzeugmaschine finden an der Werkstoffstange Bearbeitungsvorgänge statt, beispielsweise werden mittels eines Abstechvorganges einzelne Stücke von der Werkstoffstange abgetrennt. Ist ein solcher Abtrennvorgang beendet, so muß die Werkstoffstange in der Arbeitsspindel um ein bestimmtes axiales Maß weiter vorgeschoben werden, was durch den Werkstoffschieber bewerkstelligt wird. Der Werkstoffschieber ist somit in die Arbeitsvorgänge und in den Arbeitsrythmus der Werkzeugmaschine einbezogen. Der Werkstoffschieber bzw. dessen vorderer Kopf, der am hinteren Ende der einzuschiebenden Werkstoffstange anliegt, ragt nach und nach immer weiter in die Arbeitsspindel hinein, und dient meist auch dazu, ein Endstück der Werkstoffstange, das nicht mehr bearbeitet werden kann, aus der Arbeitsspindel auszuwerfen.

Anschließend wird der Werkstoffschieber wieder zurückgezogen, möglicherweise aus der Führung heraus verschwenkt, so daß eine neue Werkstoffstange eingelegt werden kann, die dann anschließend wieder der Werkzeugmaschine zugeführt wird.

Aus der DE-OS 35 28 743 ist ferner bekannt, eine Vorrichtung zum Zuführen von Werkstoffstangen so auszubilden, daß mit ein- und derselben Vorrichtung Werkstoffstangen verschiedenen Durchmessers zugeführt werden können, wobei verschiedene, jeweils an den Durchmesser der Werkstoffstange angepaßte Werkstoffschieber vorhanden sind.

Der Kopfbereich des Werkstoffschiebers, der bis in die Arbeitsspindel hineinragen kann, weist üblicherweise einen etwas geringeren Außendurchmesser als der lichte Innendurchmesser der Stangenführung bzw. der Arbeitsspindel auf, wobei sich letztere während der Bearbeitungsvorgänge mit Drehzahlen von einigen tausend Umdrehungen um den Werkstoffschieber dreht. Der in die Stangenführung bzw. in die Arbeitsspindel hineinragende Werkstoffschieber neigt aufgrund der Schwerkraft dazu, am vorderen Ende abzühängen, so daß es möglich ist, daß er mit der Innenseite der Stangenführung oder der Arbeitsspindel in Berührung tritt. Wird nun zu Beginn eines Arbeitsvorganges, beispielsweise eines Ablängvorganges in einer Drehmaschine, die Arbeitsspindel aus der Ruhelage auf eine Drehzahl von mehreren tausend Umdrehungen beschleunigt, so schlägt der abzühängende Werkstoffschieber an der Innenfläche der Arbeitsspindel an, wodurch sowohl Beschädigungen am Werkstoffschieber als auch an der Arbeitsspindel auftreten können.

Befindet sich der Kopf noch in der Stangenführung, beispielsweise beim Vorschieben einer mehrere Meter langen Stange in die Arbeitsspindel, so wird der abhängende Kopf von der von der Arbeitsspindel gedrehten Werkstoffstange, an der der Kopf liegt, in der Stangenführung hin- und hergeschlagen.

Es ist bekannt geworden, zur Lösung dieses Problemes, den Außendurchmesser des Werkstoffschiebers möglichst exakt dem Innendurchmesser der Arbeitsspindel bzw. der Stangenführung anzupassen und diesen drehbeweglich zu lagern, so daß der Drehkopf von der Arbeitsspindel mitgedreht wird. Dies verlangt jedoch eine äußerst präzise Bearbeitung der Arbeitsspindel bzw. der Stangenführung und des Werkstoffschiebers und macht besondere Zentriervorkehrungen notwendig, damit der paßgenaue Kopfbereich des Werkstoffschiebers überhaupt in die Arbeitsspindel eintreten kann. Aufgrund von vorhandenen Fertigungstoleranzen und der Notwendigkeit, daß der Werkstoffschieber axial in der Spindel verschiebbar sein muß, verbleibt zumindest ein geringer Luftspalt zwischen Außenseite des Werkstoffschiebers und Innenseite der Arbeitsspindel, so daß ein Schlagen des Werkstoffschiebers beim Drehen der Spindeln dennoch stattfindet.

Zur Lösung dieses Problemes ist es ferner bekannt geworden, bei einem jeweiligen Arbeitsvorgang den Werkstoffschieber völlig aus der Arbeitsspindel abzuziehen, nach Beendigung des Arbeitsvorganges den Werkstoffschieber wieder in die Arbeitsspindel einzuführen und die Werkstoffstange um ein bestimmtes Maß vorzuschieben, woraufhin der Werkstoffschieber wieder abgezogen wird.

Diese Verfahrensweise ist äußerst zeitaufwendig und auch steuerungstechnisch sehr aufwendig, da ja der Werkstoffschieber, zum Vorschieben einer Werkstoffstange in der Arbeitsspindel nach einem Arbeitsgang, zunächst exakt an das hintere Ende der Werkstoffstange angelegt werden muß, um anschließend die Werkstoffstange um ein exaktes Vorschubmaß vorschieben zu können.

Aus der US-PS-2 961 741 ist ein Werkstoffschieber bekannt, der mit bewegbaren Elementen in Form von radial gerichteten Stiften versehen ist. Die Stifte weisen an ihrem radial äußeren Ende Ausnehmungen auf, in denen ein diese umfänglich verbindender Gummiring eingelegt ist, der die vier gleichmäßig umfänglich verteilten Stifte radial nach innen zieht. In der radial innersten Position treffen die vier Stifte etwa auf Höhe der Mittellängslinie des Werkstoffschiebers zusammen. Der Werkstoffschieber ist mittig mit einer axial durchgehenden Bohrung versehen, in die die inneren Enden der Stifte hineinreichen. Wird der Werkstoffschieber über das vordere Ende der Stangenführung hinausgeschoben, können die Stifte radial dadurch nach außen bewegt werden, daß in die mittige Öffnung eine konisch angespitzte Stange eingeschoben wird, die nach radialem Spreizen der Stifte axial durch den Kopf und über diesen hinaus geschoben werden kann. Diese Stange dient als Vorschubelement bzw. Auswerfer für ein Endstück der zugeführten Werkstoffstange. Durch diese angespitzte Stange soll quasi ein Verlängern des Werkstoffschiebers zum Auswerfen des Endstückes erzielt werden. Wird die angespitzte Stange wieder zurückgezogen, kann der Werkstoffschieber erst dann wieder in der Stangenführung zurückgeschoben werden, nachdem die Stifte durch den elastischen Ring wieder nach innen gezogen wurden.

Aufgabe der vorliegenden Erfindung ist, einen Werkstoffschieber der eingangs genannten Art zu schaffen, bei dem die Gefahr des Schlagens des Werkstoffschiebers aufgrund von Durchhängen sowohl in der drehenden Arbeitsspindel als auch in der Stangenführung ausgeschlossen ist.

Erfindungsgemäß wird die Aufgabe dadurch gelöst, daß die Elemente als Klemmelemente ausgebildet sind, die über eine Steuerung derart spreizbar sind, daß der Werkstoffschieber in einer beliebigen axialen Arbeitsposition relativ zur Innenfläche der Stangenführung bzw. der Arbeitsspindel unverrückbar mit dieser geklemmt ist.

Die radial bewegbaren Klemmelemente sorgen dafür, daß zum einen eine exakte Zentrierung des Werkstoffschiebers in der Arbeitsspindel bzw. in der Stangenführung möglich ist, und daß der Werkstoff zugleich jeweils mit dieser verklemmt ist. Die Klemmung sorgt dafür, daß die Arbeitsspindel beim Beschleunigen aus der Ruhelage auf die Arbeitsumdrehungszahl den Werkstoffschieber zentriert mitdreht, wodurch ein Schlagen ausgeschlossen ist. Diese Maßnahme hat nun zusätzlich den beträchtlichen Vorteil, daß das Außenmaß des Werkstoffschiebers wesentlich geringer als das lichte Innenmaß der Arbeitsspindel oder der Stangenführung sein kann, so daß dieser ohne besondere Vorsichts- oder Zentriermaßnahmen in die Arbeitsspindel bzw. Stangenführung eingeführt werden kann, also sind entsprechend fertigungsgenaue Maße nicht mehr notwendig. Es ist sogar möglich, dann Werkstoffschieber mit verschiedenen Außendurchmessern in ein- und dieselbe Arbeitsspindel einzuführen. Die Maßnahme des festgeklemmten Werkstoffschiebers hat darüberhinaus den beträchtlichen Vorteil, daß die sich ebenfalls in der Arbeitsspindel bzw. noch in der Stangenführung befindliche Werkstoffstange an ihrem hinteren Ende, an der ja der Werkstoffschieber anliegt, gehalten wird, so daß ein Schlagen des hinteren Endes der Werkstoffstange in der Arbeitsspindel bzw. in der Stangenführung ebenfalls ausgeschlossen ist. Ferner hat diese Maßnahme den Vorteil, daß ein rückwärtiges Ausweichen der Werkstoffstange, beispielsweise aufgrund von Bearbeitungsvorgängen die axiale rückwärts gerichtete Kräfte ausüben, verhindert wird. So ist es beispielsweise nunmehr auch möglich, bei Werkzeugmaschinen mit einer langen Arbeitsspindel entsprechend lange Werkstoffschieber hindurchzuführen, die in jeder Arbeitsposition durch das Klemmen unverrückbar in der Arbeitsspindel gehalten werden und mit dieser mitgedreht werden können, so daß ein Schlagen vollkommen ausgeschlossen ist.

Somit wird die Aufgabe vollkommen gelöst.

In einer besonderen Ausgestaltung der Erfindung sind zumindest zwei, in einer Radialebene liegende, jeweils rotationssymmetrisch angeordnete Klemmelemente vorgesehen.

Diese Maßnahme hat den Vorteil, daß durch die rotationssymmetrische Anordnung von zwei, drei, vier, fünf ... oder mehreren Klemmelementen in einer Radialebene ein sicheres und zentrisches Klemmen des Werkstoffschiebers in der Arbeitsspindel bzw. in der Stangenführung einfach möglich ist, so daß keine Unwuchten entstehen.

In einer weiteren Ausgestaltung der Erfindung ist ein über eine Steuerung relativ zum Werkstoffschieber axial verschiebbarer Spreizkeil vorgesehen, auf dessen Keilflächen die Klemmelemente sitzen, so daß eine Axialverschiebung des Spreizkeils eine Radialverschiebung der Klemmelemente bewirkt.

Diese Maßnahme hat den Vorteil, daß über mechanisch sehr einfache und robuste Mittel die Klemmung bewerkstelligt werden kann. Durch entsprechende rotationssymmetrische und identische Ausgestaltung der Klemmelemente wird auf mechanisch einfache Mittel eine exakte Zentrierung erreicht, die ohne besondere Vorsichtsmaßnahmen ein "Abhängen" eines Werkstoffschiebers beim Vorschieben und noch stillstehender Arbeitsspindel ausgleicht. Das bedeutet, daß ein Spreizkeil, um den rotationssymmetrisch drei Klemmelemente angeordnet sind, wo beispielsweise in einer bestimmten Arbeitsposition ein Klemmelemente direkt in Schwerkraftrichtung liegt, dieses den Werkstoffschieber so ausrichtet, daß der Werkstoffschieber aus der abhängenden Position in die exakt koaxial zur Arbeitsspindel ausgerichteten Position angehoben wird, so daß dann der Schwerpunkt des rotationssymmetrischen Werkstoffschiebers exakt auf der Mittellängsachse bzw. Rotationsachse der Arbeitsspindel bzw. der Stangenführung liegt.

In einer weiteren Ausgestaltung der Erfindung ist der Spreizkeil gegen Federkraft mittels der Steuerung axial relativ zum Werkstoffschieber aus einer Ruhelage, in der die Klemmelemente nicht gespreizt sind, verschieblich gelagert, die Klemmelemente sind jedoch lediglich radial verschieblich am Werkstoffschieber angeordnet.

Diese Maßnahme hat nun den beträchtlichen Vorteil, daß die Federkraft den Spreizkeil normalerweise derart verschiebt, daß die Klemmelemente nicht gespreizt sind bzw. radial nach innen gerichtet bewegbar sind, so daß bei Nichtbetätigung der Steuerung oder auch bei einem Ausfall der Steuerung der Werkstoffschieber auf jeden Fall in die Arbeitsspindel eingeschoben bzw. aus dieser abgezogen werden kann. Erst die Betätigung der Steuerung verschiebt den Spreizkeil gegen die Federkraft derart, daß die Klemmelemente gespreizt werden und für die Klemmung sorgen. Dies ermöglicht auch sicherheitstechnische Vorkehrungen dahingehend, daß bei einem Ausfall der Steuerung die Maschine überhaupt nicht in Betrieb gesetzt werden kann, so daß dann auch kein Schlagen des Werkstoffschiebers unter Beschädigung der Arbeitsspindel stattfinden kann.

In einer weiteren Ausgestaltung der Erfindung sind die Klemmelemente gegen eine radial wirkende Rückholkraft radial spreizbar.

Diese Maßnahme hat den Vorteil, daß durch die Rückholkraft den Klemmelementen die Tendenz verliehen wird, sich radial nach innen zu bewegen, d.h. fehlt die radial nach außen gerichtete Spreizkraft des Spreizkeiles, bewegen sich die Klemmelemente radial nach innen, so daß beispielsweise bei einem schnellen Abziehen des Werkstoffschiebers aus der Arbeitsspindel keine oder nur wenige Berührungspunkte mit der Innenfläche der Arbeitsspindel bestehen und außerdem sichergestellt ist, daß die Klemmelemente bei einer Handhabung des Werkstoffschiebers, beispielsweise beim Montieren oder Demontieren, diese nicht herausfallen.

In einer weiteren Ausgestaltung der Erfindung sind zumindest an zwei, axial voneinander beabstandeten Stellen am Werkstoffschieber radial bewegbare Klemmelemente vorgesehen.

Diese Maßnahme hat den beträchtlichen Vorteil, daß an zwei axial voneinander beabstandeten Punkten Klemmstellen zwischen Werkstoffschieber und Arbeitsspindel bzw. Stangenführung möglich sind, so daß eine besonders exakte Zentrierung und Klemmung durch die "Zwei-Punkt-Lagerung" gewährleistet ist.

In einer weiteren Ausgestaltung der Erfindung ist der Spreizkeil als Spreizkonus ausgebildet, dessen Konusachse längs der Mittellängsachse des Werkstoffschiebers verläuft.

Diese Maßnahme hat den erheblichen Vorteil, daß der Spreizkonus zum einen fertigungstechnisch sehr einfach herstellbar ist und außerdem zugleich mehreren scheibensegmentförmigen Klemmelementen als Spreizkeil dienen kann.

In einer weiteren Ausgestaltung der Erfindung sind die Klemmelemente am Kopf angeordnet, und der Kopf ist über eine Lagerung um die Mittellängsachse des Werkstoffschiebers drehbeweglich gelagert.

Diese Maßnahme hat den beträchtlichen Vorteil, daß die Klemmung lediglich im Kopfbereich, der ja am meisten zum Abhängen und Schlagen neigt, bewerkstelligt wird, und durch die drehbewegliche Verbindung mit dem verbleibenden Körper des Werkstoffschiebers muß beim Drehen der Arbeitsspindel lediglich der Kopf mitgedreht werden, d.h. die zu bewegenden Massen können gering gehalten werden.

In einer weiteren Ausgestaltung der Erfindung weist die Steuerung koaxial im Werkstoffschieber angeordnete Steuerleitungsmittel auf, mittels denen der zumindest eine Spreizkeil relativ zum Werkstoffschieber axial hin- und herbewegbar ist.

Diese Maßnahme hat den Vorteil, daß die im Werkstoffschieber angeordneten Steuerleitungsmittel geschützt im Werkstoffschieber aufgenommen sind, so daß die Steuerungsmittel vor äußeren Beschädigungen geschützt sind, und somit die Betriebssicherheit und Lebensdauer der erfindungsgemäßen Klemmung beträchtlich erhöhen.

In einer besonderen vorteilhaften Ausgestaltung der Erfindung weisen die Steuerleitungsmittel eine koaxial im Werkstoffschieber angeordnete Steuerstange auf.

Diese Maßnahme hat den Vorteil, daß mechanisch sehr robuste und einfache Steuerungsmittel vorgesehen sind, um den Spreizkeil im Werkstoffschieber relativ zu diesem axial hin und her zu bewegen.

In einer weiteren Ausgestaltung der Erfindung ist vorgesehen, daß die Steuerleitungsmittel eine koaxial im Werkstoffschieber angeordnete Druckmittelleitung aufweisen.

Diese Maßnahme hat insbesondere in Zusammenhang mit dem selbständig in die Ruhelage rückstellenden Spreizkeil den Vorteil, daß das gasförmige oder flüssige Druckmedium ohne direkte mechanische Verbindung mit dem Kopf arbeiten kann, so daß beispielsweise der Klemmechanismus eines drehbar gelagerten Kopfes, der an einem an sich ruhenden weiteren Werkstoffschieberkörper angeordnet ist, einfach gesteuert werden kann.

In einer weiteren Ausgestaltung der Erfindung weist die Steuerung eine Schnittstelle zum Anschluß an eine Steuerung der Werkzeugmaschine auf.

Diese Maßnahme hat den Vorteil, daß eine exakte Synchronisation zwischen Vorschubbewegung durch den Werkstoffschieber und Arbeitsabläufen in der Werkzeugmaschine erreicht werden kann.

In einer weiteren Ausgestaltung der Erfindung sind die Klemmelemente als gummielastische Körper ausgebildet.

Diese Maßnahme hat den Vorteil, daß die dem Verschleiß ausgesetzte Klemmverbindung zwischen der aus möglicherweise hochwertigen Materialien hergestellten Innenwandung der Arbeitsspindel und dem Werkstoffschieberkopf durch kostengünstige Materialien bewerkstelligt werden kann.

Es versteht sich, daß die vorstehend genannten und die nachstehend noch zu erläuternden Merkmalen nicht nur in der jeweils angegebenen Kombination, sondern auch in anderen Kombinationen und in Alleinstellung einsetzbar sind, ohne den Rahmen der vorliegenden Erfindung zu verlassen.

Die Erfindung wird nachfolgend anhand einiger ausgewählter Ausführungsbeispiele in Zusammenhang mit den beiliegenden Zeichnungen näher beschrieben und erläutert. Es zeigen:
Fig. 1 stark schematisiert eine Vorrichtung zum Zuführen von Werkstoffstangen in eine Arbeitsspindel einer Werkzeugmaschine, wobei ein erfindungsgemäßer Werkstoffschieber Einsatz findet;
Fig. 2 einen ausschnittsweisen Teilschnitt eines erfindungsgemäßen Werkstoffschiebers im Bereich dessen Kopfendes, wobei dieser in einer Arbeitsspindel aufgenommen ist, und
Fig. 3 einen Schnitt längs der Linie 111-111 in Fig. 2.

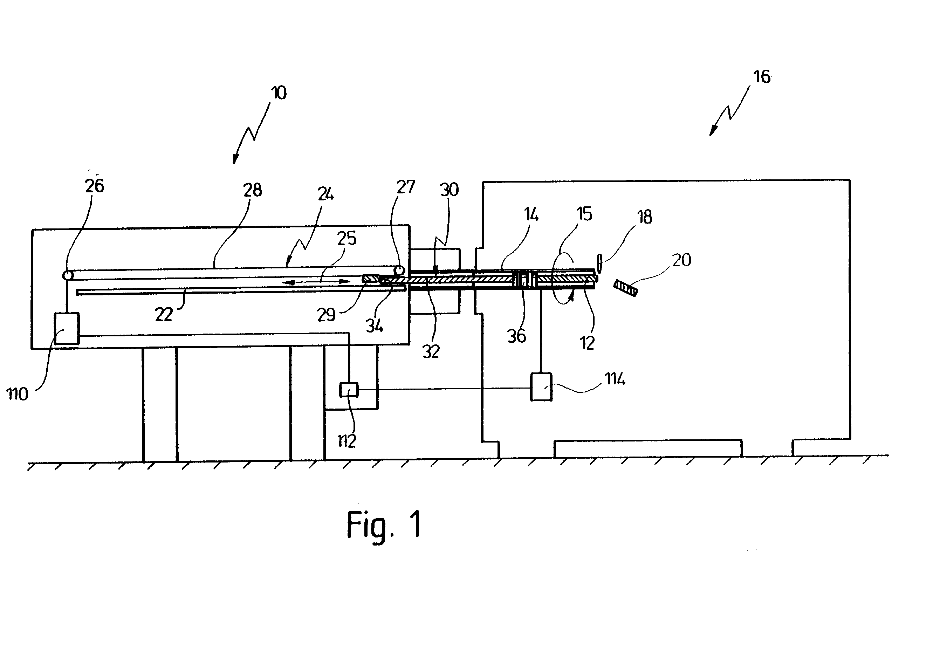

Eine in Fig. 1 dargestellte Vorrichtung 10 dient zum Zuführen von Werkstoffstangen 12 in eine Arbeitsspindel 14 einer Werkzeugmaschine 16.

Die Werkzeugmaschine 16 ist eine Drehmaschine, in der von der Werkstoffstange 12 einzelne Stücke 20 abgetrennt werden sollen, wobei dies mittels eines stark schematisch dargestellten Abstechwerkzeuges 18 bewerkstelligt wird.

Beim Abstechvorgang dreht sich die Arbeitsspindel 14 samt der darin aufgenommenen Werkstoffstange 12 mit einigen tausend Umdrehungen, wie dies an sich bekannt ist und in Fig. 1 durch einen Pfeil 15 angedeutet ist.

Zum Zuführen der Werkstoffstange 12 in die Arbeitsspindel 14 ist in der Vorrichtung 10 eine Stangenführung 22 vorgesehen, in der eine Werkstoffstange 12 aus einem hier nicht näher dargestellten Magazin eingelegt werden kann. Die Stangenführung 22 ist als rohrförmiger Kanal ausgebildet, der auch aus zwei Halbschalen aufgebaut sein kann, wobei eine Halbschale verschwenkbar ausgebildet ist, die zum Einlegen der Werkstoffstange 12 in die Stangenführung verschwenkt werden kann. Zum zumindest teilweise Vorschieben der Werkstoffstange in der Stangenführung 22 ist ein Antrieb 24 vorgesehen.

Der Antrieb 24 weist zwei niveaugleiche Umlenkrollen 26, 27 auf, um die eine Kette 28 läuft. Dabei ist eine der beiden Umlenkrollen 26, 27 mit einem hier nicht näher dargestellten Motor verbunden.

Die Kette 28 ist mit einem Schieber 29 versehen, der beim Betreiben des Antriebes 24 längs der Führung 22 hin und her bewegt wird, wie dies durch einen Pfeil 25 dargestellt ist.

Der Schieber 29 dient dazu, um zunächst eine in die Stangenführung 22 eingelegte Werkstoffstange 12 um ein solches Maß Richtung Werkzeugmaschine 16 vorzuschieben, daß in die Stangenführung 22 hinter das hintere Ende der Werkstoffstange 12 ein Werkstoffschieber 30 gelegt werden kann.

Der Werkstoffschieber 30, der in Fig. 1 nur schematisch dargestellt ist, weist eine Stange 32 auf, an derem vorderen Ende ein Kopf 36 angeordnet ist, dessen stirnseitiges Ende am hinteren Ende der Werkstoffstange 12 anliegt.

Am hinteren Ende 34 der Stange 32 wiederum greift der Schieber 29 an, so daß bei dessen Vorschubbewegung der Werkstoffschieber 30 die Werkstoffstange 12 in dem Kanal der Stangenführung 22 vorschiebt und zwar soweit, bis diese in die Arbeitsspindel 14 hineinreicht, wie dies in Fig. 1 dargestellt ist. Nach einem jeweiligen Arbeitsvorgang in der Werkzeugmaschine 16, beispielsweise den zuvor erwähnten Abtrennvorgang, wird der Antrieb 24 in Gang gesetzt und schiebt dann den Werkstoffschieber 30 und dieser die Werkstoffstange 12 um ein entsprechendes Maß in der Arbeitsspindel 14 vor.

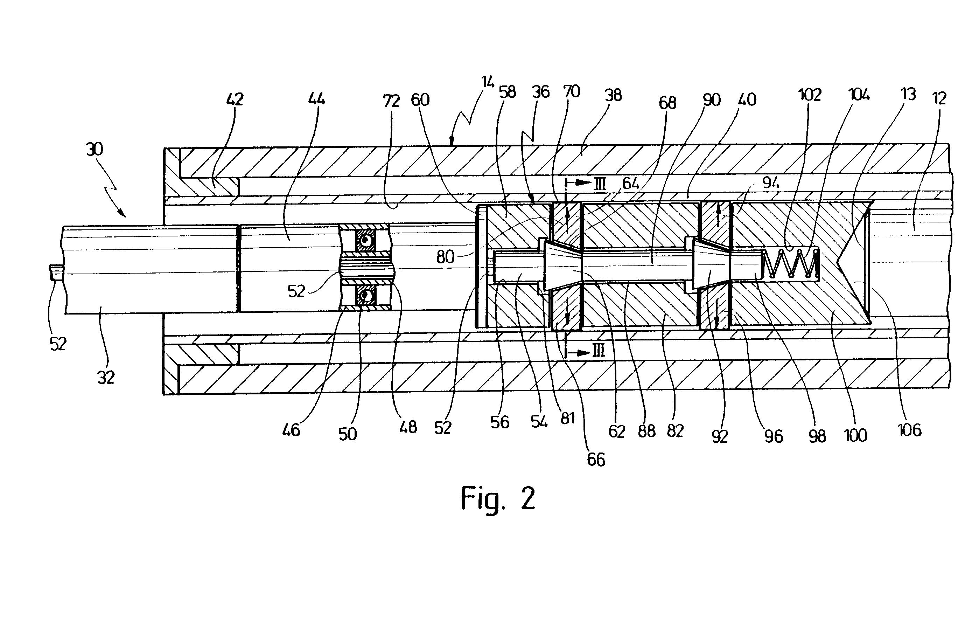

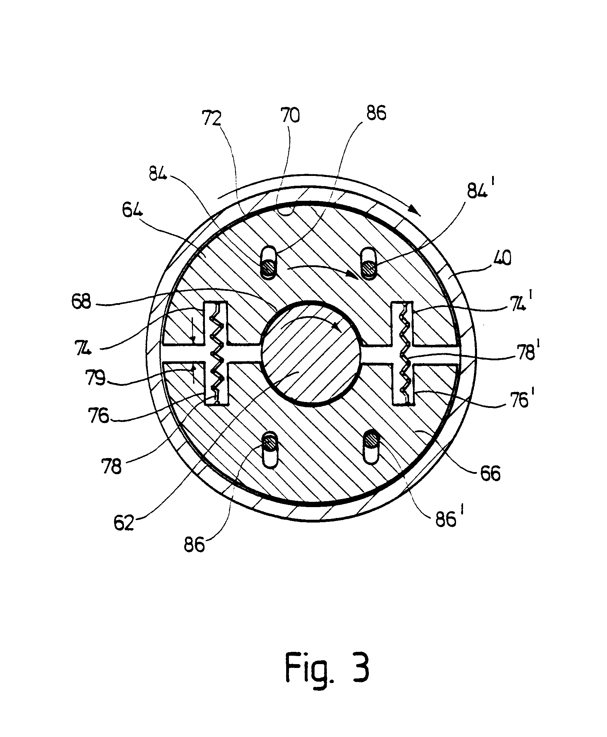

Die nähere Ausgestaltung des Werkstoffschiebers 30 sei nunmehr im Zusammenhang mit Fig. 2 und 3 beschrieben.

Aus Fig. 2 ist zu entnehmen, daß die Arbeitsspindel 14 aus einem äußeren Spindelrohr 38 sowie einem Spindeleinsatzrohr 40 besteht, die über ein Verbindungsstück 42 miteinander verbunden sind.

Die Stange 32 des Werkstoffschiebers 30 ist dabei über eine Lagerung 44 mit dem Kopf 36 verbunden.

Die Lagerung 44 besteht aus einem äußeren Rohr 46 und einem inneren Rohr 48.

Zwischen äußerem Rohr 46 und innerem Rohr 48 ist ein Kugellager 50 aufgenommen, so daß sich das äußere Rohr 46 um das innere Rohr 48 drehen kann. Im inneren Rohr 48 ist eine Steuerstange 52 aufgenommen, die sich auch durch die Stange 32 hindurch erstreckt und deren Funktionsweise später beschrieben wird.

Das äußere Rohr 46 ist an seinem dem Kopf 36 zugewandten Ende über einen Ringflansch 60 mit einem hinteren Ende eines ersten zylindrischen Teiles 58 verbunden.

Das erste zylindrische Teil 58 ist mit einer mittigen durchgehenden Bohrung 56 versehen, durch den sich ein zylindrischer Abschnitt 54 der Steuerstange 52 hindurch erstreckt. Der zylindrische Abschnitt 54 weist dabei einen etwas größeren Durchmesser als der verbleibende Körper der Steuerstange 52 auf.

Der zylindrische Abschnitt 54 geht anschließend in einen ersten Spreizkonus 62 über, dessen Verjüngung dem Kopf 36 bzw. der Werkstoffstange 12 zugewandt ist.

Auf dem ersten Spreizkonus 62 sitzen zwei etwa halbscheibenförmige Klemmelemente 64, 66 (siehe insbesondere Fig. 3).

Die Klemmelemente 64 bzw. 66 sind identisch ausgebildet und weisen jeweils eine innere Keilfläche 68 auf, deren Steigung und Form der Außenfläche des ersten Spreizkonus 62 entspricht.

Die umfängliche Außenfläche 70 der Klemmelemente 64, 66 entspricht dem Krümmungsradius der Innenfläche 72 des Spindeleinsatzrohres 40.

An den sich gegenüberliegenden, etwa radial erstreckenden Längskanten der Klemmelemente 64, 66 sind gegenüberstehende Sacklochbohrungen 74, 76 bzw. 74', 76' vorgesehen, in denen jeweils eine Zugfeder 78, 78' angeordnet ist.

Die Zugfedern 78, 78' sind derart vorgespannt, daß sie die beiden Klemmelemente 64, 66 aufeinander zu gerichtet zu ziehen, wie dies durch einen Pfeil 79 in Fig. 3 angedeutet ist. Der erste Spreizkonus 62 bewegt bei entsprechendem Vorschub die Klemmelemente 64, 66 entgegen der Kraft der Federn 78, 78', nämlich radial nach außen gerichtet, wie dies in Fig. 1 durch einen Pfeil 80 angedeutet ist.

Auf der dem ersten Spreizkonus 62 zugewandten Seite ist das erste zylindrische Teil 58 mit einer zylindrischen Ausnehmung 81 Versehen, so daß die Basis des ersten Spreizkonus 62 etwas in die Ausnehmung 81 hineintreten kann, wodurch es dann möglich ist, daß die Klemmelemente 64, 66 durch die Federn 78, 78' radial nach innen bewegt werden.

Ein sich an den ersten Spreizkonus 62 anschließender weiterer zylindrischer Abschnitt 90 der Steuerstange 52, ist in einer mittigen durchgehenden Bohrung 88 eines zweiten zylindrischen Teiles 82 aufgenommen.

Aus Fig. 3 ist zu entnehmen, daß das erste zylindrische Teil 58 und das zweite zylindrische Teil 82 über vier Stäbe 84, 84', .... verbunden sind, die durch entsprechende Langlochöffnungen 86, 86', .... in den Klemmelementen 64, 66 hindurchreichen.

Der lichte axiale Abstand zwischen dem ersten zylindrischen Teil 58 und dem zweiten zylindrischen Teil 82 ist dabei so bemessen, daß zwischen diesen die Klemmelemente 64, 66 gerade radial beweglich, jedoch nicht axial beweglich aufgenommen sind.

Durch die Federn 78, 78' einerseits sowie die Stäbe 84 sind die Klemmelemente 64, 66 auch unverlierbar am Kopf 36 des Werkstoffschiebers 30 gehalten.

Am Ende des durch das zweite zylindrische Teil 82 hindurchreichenden zylindrischen Abschnittes 90 der Steuerstange 52 ist ein zweiter Spreizkonus 92 vorgesehen, auf dem entsprechende Klemmelemente 94, 96 aufgenommen sind.

Die Ausgestaltung und Anordnung des zweiten Spreizkonus 92 sowie der Klemmelemente 94, 96 ist identisch wie der erste Spreizkonus 62 bzw. die Klemmelemente 64, 66 so daß auf eine weitere Beschreibung verzichtet werden kann.

Am vorderen Ende des zweiten Spreizkonus 92 ragt ein endseitiger Zapfen 98 vor, der in ein Sackloch 102 eines dritten zylindrischen Teiles 100 hineinreicht.

Das dritte zylindrische Teil 100 ist dabei wie zuvor in Zusammenhang mit der Verbindung zwischen zweitem zylindrischen Teil 82 und erstem zylindrischen Teil 28 beschrieben mit dem zweiten zylindrischen Teil 82 verbunden.

Im Sackloch 102 ist eine Feder 104 angeordnet, die in der in Fig. 2 dargestellten Position des Werkstoffschiebers 30 zusammengedrückt ist, somit der Steuerstange 52 die Tendenz verleiht, sich in der Darstellung von Fig. 2 nach links zu bewegen.

Das dritte zylindrische Teil 100 ist an seiner stirnseitigen Außenseite mit einem Zentrierkonus 106 versehen, über den der Kopf 36 an einem hinteren Ende 13 der vorzuschiebenden Werkstoffstange 12 anliegt.

Aus Fig. 1 ist zu entnehmen, daß eine Steuereinheit 110 der Vorrichtung 10 über eine Schnittstelle 112 mit einer Steuerung 114 der Werkzeugmaschine 16 verbunden ist. Dadurch ist eine abgestimmte synchrone Arbeitsweise von Vorrichtung 10 und Werkzeugmaschine 16 zu bewerkstelligen.

Die Funktionsweise der Vorrichtung 10 ist nun derart, daß, nachdem eine Werkstoffstange 12 in an sich bekannter Weise in die Arbeitsspindel 14 eingeschoben wurde, und bevor diese gedreht wird (Fig. 1 Pfeil 15) die Steuerung 110 über den Schieber 29 bewirkt, daß sich die Steuerstange 52 relativ zum Werkstoffschieber 30 in Richtung Kopfende, in der Darstellung von Fig. 2 nach rechts bewegt. Der erste Spreizkonus 62 bewegt dabei die Klemmelemente 64, 66 bzw. der zweite Spreizkonus 92 bewegt die Klemmelemente 94, 96 radial soweit nach außen, bis deren jeweilige zylindrische Außenfläche 70 an der Innenfläche 72 des Spindeleinsatzrohres 40 zum Liegen kommt. Die Steuereinheit 110 verschiebt dabei die Steuerstange 52 um ein solches Maß, daß ein ausreichender Klemmdruck zwischen Kopf 36 und Spindeleinsatzrohr 40 herrscht, so daß beim Drehen der Arbeitsspindel 14 der Kopf 36 mitgedreht wird.

Aus Fig. 3 ist insbesondere zu entnehmen, daß dadurch, daß die Mittellängsachse eines jeden Spreizkonus 62, 92 auf der Mittellängsachse der Arbeitsspindel 14 zum Liegen kommt, eine exakte Zentrierung des Kopfes erzielt wird, was selbstverständlich auch durch die identische Ausgestaltung und spiegelbildliche Anordnung der Klemmelemente 64, 66 bzw. 94 bzw. 96 bewerkstelligt wird.

Wird nunmehr die Arbeitsspindel 14 um ihre Längsachse gedreht, findet außerdem durch den Zentrierkonus 106 eine exakte Zentrierung der Werkstoffstange 12 statt.

Durch die drehbewegliche Lagerung 44 kann sich der Kopf 36 um die ortsfeste Stange 32 des Werkstoffschiebers 30 drehen, so daß deren Masse nicht mitbewegt werden muß.

Nach Beendigung des Arbeitsvorganges in der Werkzeugmaschine 16, beispielsweise nach Abtrennen des Stückes 20, wird über die Steuerung 110, gekoppelt mit der Steuerung 114 der Werkzeugmaschine 16 die Steuerstange 52 in der Darstellung von Fig. 2 soweit nach links bewegt, daß die Klemmelemente 64, 66 bzw. 94, 96 soweit radial nach innen gerichtet eintreten können, daß der Klemmschluß aufgehoben wird, wonach dann der Werkstoffschieber 30 mittels des Antriebes 24 über den Schieber 29 um ein entsprechendes axiales Maß vorgeschoben werden kann und dabei dann die Werkstoffstange 12 um ein entsprechendes Maß vorschiebt. Anschließend wird wieder wie zuvor beschrieben der Kopf 36 verklemmt.

Der zuvor erwähnte Klemmvorgang kann selbstverständlich auch stattfinden, solange sich der Kopf 36 noch in dem Kanal der Stangenführung 22 befindet. Die Klemmelemente treten dann mit der Innenseite der Stangenführung 22 in Berührung. Somit kann der Kopf 36 auch in jeder axialen Verschiebelage in der Stangenführung 22 zentriert oder geklemmt werden.

In weiteren, hier nicht dargestellten Ausführungsbeispielen, ist anstatt der Steuerstange 52 eine mit einem Druckmittel beaufschlagte Steuerleitung vorgesehen, so daß dann der im Kopf 36 angeordnete Teil durch das entsprechende Druckmedium, z. B. Druckluft oder eine Druckflüssigkeit gegen die Kraft der Feder 104 nach rechts bewegt wird, um dadurch die Klemmelemente radial nach außen zu spreizen.

In weiteren, hier nicht dargestellten Ausführungsbeispielen, sind drei, vier, sechs oder acht Klemmelemente vorgesehen, wobei dann die Verbindung zwischen den einzelnen Bauteilen des Kopfes 36 zwischen den Klemmelementen bewerkstelligt werden kann, so daß nicht mehr die in Fig. 3 dargestellten Langlochöffnungen in den Klemmelementen vorgesehen sein müssen.

Die Klemmelemente können als metallische Körper oder auch als gummielastische Körper ausgebildet sein.

In weiteren, hier nicht dargestellten Ausführungsbeispielen, ist als Spreizkeil nicht ein Spreizkonus, sondern sind lediglich schwalbenschwanzförmige Spreizkeile vorgesehen, auf denen entsprechende Klemmelemente sitzen.

## Patentansprüche

1. Werkstoffschieber für eine Vorrichtung zum Zuführen von in einer Stangenführung (22) aufgenommenen Werkstoffstangen (12) in eine Arbeitsspindel (14) einer Werkzeugmaschine (16), wobei der Werkstoffschieber (30) über einen Antrieb (24) axial hin- und herbewegbar ist, und an einem in axialer Vorschubrichtung vorderen Ende mit einem Kopf (36) versehen ist, der an ein hinteres Ende (13) einer zuzuführenden Werkstoffstange (12) legbar ist, wobei der Werkstoffschieber (30) mit in radialer Richtung bewegbaren Elementen versehen ist, dadurch gekennzeichnet, daß die Elemente als Klemmelemente (64, 66; 94, 96) ausgebildet sind, die über eine Steuerung (110) radial derart spreizbar sind, daß der Werkstoffschieber (30) in einer beliebigen axialen Arbeitsposition relativ zur Innenfläche (72) der Stangenführung (22) bzw. zur Innenfläche der Arbeitsspindel (14) unverrückbar mit dieser klemmbar ist.

2. Werkstoffschieber nach Anspruch 1, dadurch gekennzeichnet, daß zumindest zwei, in einer Radialebene liegende, jeweils rotationssymmetrisch angeordnete Klemmelemente (64, 66; 94, 96) vorgesehen sind.

3. Werkstoffschieber nach Anspruch 1 oder 2, dadurch gekennzeichnet, daß ein über die Steuerung (110) relativ zum Werkstoffschieber (30) axial verschiebbarer Spreizkeil (62, 92) vorgesehen ist, auf dessen Keilflächen die Klemmelemente (64, 66; 94, 96) sitzen, so daß eine Axialverschiebung des Spreizkeiles (62, 92) eine Radialverschiebung der Klemmelemente (64, 66; 94, 96) bewirkt.

4. Werkstoffschieber nach Anspruch 3, dadurch gekennzeichnet, daß der Spreizkeil (62, 92) gegen Federkraft (104) mittels der Steuerung (110) axial relativ zum Werkstoffschieber (30) aus einer Ruhelage, in der die Klemmelemente (64, 66; 94, 96) nicht gespreizt sind, verschieblich gelagert ist, die Klemmelemente (64, 66; 94, 96) jedoch lediglich radial verschieblich am Werkstoffschieber (30) angeordnet sind.

5. Werkstoffschieber nach einem der Ansprüche 1 bis 4, dadurch gekennzeichnet, daß die Klemmelemente (64, 66; 94, 96) gegen eine radial wirkende Rückholkraft (78, 78') radial spreizbar sind.

6. Werkstoffschieber nach einem der Ansprüche 1 bis 5, dadurch gekennzeichnet, daß zumindest an zwei, axial voneinander beabstandeten Stellen am Werkstoffschieber (30) radial bewegbare Klemmelemente (64, 66; 94, 96) vorgesehen sind.

7. Werkstoffschieber nach einem der Ansprüche 3 bis 6, dadurch gekennzeichnet, daß der Spreizkeil als Spreizkonus (62, 92) ausgebildet ist, dessen Konusachse längs der Mittellängsachse des Werkstoffschiebers (30) verläuft.

8. Werkstoffschieber nach einem der Ansprüche 1 bis 7, dadurch gekennzeichnet, daß die Klemmelemente (64, 66; 94, 96) am Kopf (36) angeordnet sind, und daß der Kopf (36) über eine Lagerung (44) um die Mittellängsachse des Werkstoffschiebers (30) drehbeweglich angebracht ist.

9. Werkstoffschieber nach einem der Ansprüche 3 bis 8, dadurch gekennzeichnet, daß die Steuerung (110) koaxial im Werkstoffschieber (30) angeordnete Steuerleitungsmittel aufweist, mittels denen der zumindest eine Spreizkeil (62, 92) relativ zum Werkstoffschieber (30) axial hin- und herbewegbar ist.

10. Werkstoffschieber nach Anspruch 9, dadurch gekennzeichnet, daß die Steuerleitungsmittel eine koaxial im Werkstoffschieber (30) angeordnete Steuerstange (52) aufweisen.

11. Werkstoffschieber nach Anspruch 9, dadurch gekennzeichnet, daß die Steuerleitungsmittel eine koaxial im Werkstoffschieber angeordnete Druckmittelleitung aufweisen.

12. Werkstoffschieber nach einem der Ansprüche 1 bis 11, dadurch gekennzeichnet, daß die Steuerung (110) eine Schnittstelle (112) zum Anschluß an eine Steuerung (114) der Werkzeugmaschine (16) aufweist.

13. Werkstoffschieber nach einem der Ansprüche 1 bis 12, dadurch gekennzeichnet, daß die Klemmelemente als gummielastische Körper ausgebildet sind.
